# EUROPÄISCHE PATENTSCHRIFT

(11) **EP 2 222 510 B1**
(45) Veröffentlichungstag und Bekanntmachung des Hinweises auf die Patenterteilung: **04.04.2018**
(21) Anmeldenummer: 08852395.6
(22) Anmeldetag: 05.11.2008
(51) Int. Cl.: B60R 16/027

(54) **VERDREHSICHERUNG EINES ROTORS UND EINES GEHÄUSES EINES WICKELBANDES SOWIE EIN WICKELBAND**
ANTI-TWIST ELEMENT OF A ROTOR AND A HOUSING OF A WINDING STRIP AND WINDING STRIP
ERGOT DU ROTOR ET DU BOÎTIER D'UNE BANDE D'ENROULEMENT AINSI QUE BANDE D'ENROULEMENT

(30) Priorität: 20.11.2007 DE 102007055392
(43) Veröffentlichungstag der Anmeldung: 01.09.2010
(73) Patentinhaber: Valeo Schalter und Sensoren GmbH, 74321 Bietigheim-Bissingen (DE)
(72) Erfinder: HORST, Daniel, 74321 Bietigheim-Bissingen (DE); HASCH, Martin, 71701 Schwieberdingen (DE); SAPI, Attila, 2131 Göd (HU)
(86) Internationale Anmeldenummer: PCT/EP2008/009299
(87) Internationale Veröffentlichungsnummer: WO 2009/065495

(56) Entgegenhaltungen:
- US-A- 4 966 334

## Beschreibung

### Stand der Technik

Die Erfindung betrifft eine Verdrehsicherung eines Rotors und eines Gehäuses eines Wickelbandes gemäß dem Oberbegriff des Anspruchs 1, sowie ein Wickelband gemäß dem Oberbegriff des Anspruchs 5. So genannte Wickelbänder werden benötigt, um beispielsweise Lenkwinkelsensoren, Lenksäulenmodule oder andere, im Bereich der Lenksäule oder an einer zwischen zwei Endanschlägen drehbaren Welle, angeordnete Einrichtungen, beispielsweise in einem Kraftfahrzeug, mit anderen Einrichtungen, die nicht rotatorisch angeordnet sind, elektrisch zu verbinden.

Ein Wickelband, auch als Wickelfeder oder als Kontaktspirale bezeichnet, ist hierzu spiralförmig beispielsweise um die Lenkachse bzw. Lenksäule eines Kraftfahrzeuges angeordnet. Das eine Ende eines solchen Wickelbandes ist über einen Rotor an dem drehbaren Lenkrad bzw. an der Lenksäule und das andere Ende ist ortsfest an beispielsweise einem Gehäuse angeordnet. Ein solches Wickelband dient dazu, am Lenkrad vorhandene Schalter, Sensoren oder sonstige elektrische oder elektronische Bauteile, die mit dem Lenkrad drehfest verbunden sind, mittels elektrischer Leitungen mit anderen elektrischen oder elektronischen Bauteilen zu verbinden, die nicht der Drehbewegung des Lenkrades folgen.

So umfassen beispielsweise Lenkwinkelsensoren in der Regel ein mit der Drehbewegung des Lenkrades bzw. der Lenksäule gekoppeltes Codierelement und eine der Drehbewegung nicht folgende, ortsfest angeordnete Abtasteinheit, die die jeweilige Winkelstellung des Codierelements erfasst. Das der Drehbewegung folgende Codierelement ist hierbei in einem Sensorgehäuse gelagert. Zur elektrischen Verbindung beispielsweise von Codierelement und Abtasteinheit weist ein Wickelband in der Regel eine Vielzahl von nebeneinander liegenden, gegenseitig isolierten Leiterbahnen auf. Bei der Drehung des Lenkrades wird die spiralförmig angeordnete Wickelfeder je nach Drehrichtung aufgewickelt oder abgewickelt.

Durch die EP 1388484 A1 ist ein Lenkstockmodul für ein Fahrzeug mit einem Grundgehäuse und mit einem mit der Drehbewegung eines Lenkrades des Fahrzeuges koppelbaren Rotor bekannt, wobei der Rotor am Grundgehäuse drehbar gelagert ist, und wobei das Lenkstockmodul einen Lenkwinkelsensor umfasst, der ein mit dem Rotor drehfest gekoppeltes Codierelement aufweist. Das Grundgehäuse weist einen Wickelbandabschnitt für ein Wickelband zur Übertragung von elektrischen Signalen zwischen dem Rotor und dem Grundgehäuse und einen Sensorabschnitt für den Lenkwinkelsensor auf.

Beim Transport und der Lagerung von Wickelbändern muss sichergestellt sein, dass sich Rotor und Gehäuse nicht voneinander lösen, und dass sich die Wickelfeder nicht abwickelt.

Hierzu sind Verdrehsicherungen bestehend aus separaten, am Rotor und/oder an Gehäuse angeordneten Bauteilen in Form von Pins, Klebestreifen und Schiebern zu Verriegelung vorgesehen. Diese Bauteile sind ein zusätzlicher Kostenfaktor und sie benötigen Bauraum, was im Lenkstockbereich eines Fahrzeuges besonders nachteilig ist, da dort grundsätzlich sehr beengte Platzverhältnisse herrschen.

Aus der US 4 966 344 ist bereits eine gattungsgemäße Verdrehsicherung als Transportsicherung für ein Wickelband bekannt. Das bekannte Wickelband umfasst einen Rotor sowie ein äußeres Gehäuse, die im Einbauzustand an einem Fahrzeug relativ zueinander drehbeweglich sind. Um Drehbewegungen bei Transport und Montage der Wickelfeder zu vermeiden, ist eine Verdrehsicherung vorgesehen, die ein klammerförmiges Sicherungselement umfasst. In der Sicherungsstellung umgreift das klammerförmige Sicherungselement neben einander liegende Auflagebereiche von Rotor und Gehäuse, wodurch Relativbewegungen zwischen diesen Teilen unterbunden werden.

Das Sicherungselement ist über eine Feder elastisch an einem Trägerteil befestigt, das in einem Hohlquerschnitt des Rotors angeordnet ist. Bei der Montage der Wickelfeder wird die Lenkwelle in den Hohlquerschnitt des Rotors eingeführt und verdrängt das Trägerteil axial, wodurch das klammerförmiger Sicherungselement aus der Überdeckung mit den Auflagebereichen von Rotor und Gehäuse bewegt wird. Die Sicherung ist hiernach gelöst, so dass Rotor und Gehäuse nunmehr relativ zueinander drehbeweglich sind. Die bekannte Verdrehsicherung ermöglicht eine zuverlässige Sicherung des Wickelbandes bei Montage und Transport weist aber verhältnismäßig aufwändige Bauweise auf.

### Offenbarung der Erfindung

Ausgehend von der eingangs erwähnten Verdrehsicherung wird es als eine Aufgabe der Erfindung angesehen, eine Verdrehsicherung, insbesondere Transportsicherung, eines Rotors und eines Gehäuses eines Wickelbandes weiter zu entwickeln.

Die Nachteile des Standes der Technik werden bei einer erfindungsgemäßen Verdrehsicherung, insbesondere Transportsicherung, eines Rotors und eines Gehäuses eines Wickelbandes dadurch vermieden, dass die Verdrehsicherung in das Gehäuse und den Rotor des Wickelbandes integriert ist.

Wird die Verdrehsicherung in die bestehenden Bauteile integriert, so können Beschaffungskosten und Montagekosten verringert werden. Außerdem wird kein zusätzlicher Bauraum benötigt. Dadurch wird ein mit einer erfindungsgemäßen Verdrehsicherung ausgestattetes Wickelband gegenüber dem Stand der Technik preiswerter und weist einen geringeren Platzbedarf auf.

Vorzugsweise ist die in die bestehenden Bauteile integrierte Verdrehsicherung derart ausgebildet, dass sich am Rotor eine Nut befindet, in die eine am Gehäuse angeordnete Rastnase einrastet. Damit ist die Verbindung Rotor zu Gehäuse gegen Verdrehen und axiale Bewegung fixiert. In dieser Position kann das Produkt, hier das Wickelband, transportiert werden.

Selbstverständlich ist es auch denkbar, die Rastnase am Rotor und die Nut am Gehäuse anzuordnen, wobei sich aus der Anordnung der Nut am Rotor der Vorteil ergibt, dass keine Gefahr besteh, dass sich im Betrieb ein Kabel oder dergleichen an der Rastnase verfängt und möglicherweise abgerissen wird.

Bei der Montage des Sensorgehäuses wird dieses relativ zu dem Rotor in axialer Richtung bewegt, wodurch die Verrastung gelöst wird. Danach sind Gehäuse und Rotor zueinander rotatorisch und axial beweglich.

Die Erfindung ist insbesondere in Verbindung mit einem Wickelband bzw. einem Wickelbandgehäuse beispielsweise für Lenkwinkelsensoren, Lenksäulenmodule und andere Anwendungen in einem Kraftfahrzeug vorteilhaft anwendbar. Ein Wickelband zur Herstellung einer elektrischen Verbindung zwischen einem ersten, einer Drehbewegung folgenden Bauteil und einem zweiten, nicht der Drehbewegung folgenden Bauteil in einer Betriebsstellung, umfasst dabei ein Gehäuse und einen in Betriebsstellung gegenüber dem Gehäuse rotatorisch und axial beweglichen Rotor, wobei das Gehäuse gegenüber dem Rotor in einer Transportstellung mittels einer Verdrehsicherung in Bezug auf eine rotatorische und eine axiale Bewegung gesichert bzw. fixiert ist. Erfindungsgmäß ist die Verdrehsicherung in das Gehäuse und den Rotor des Wickelbades integriert. Die Verdrehsicherung ist wie oben beschrieben ausgebildet. Die Erfindung wird nachfolgend anhand der Zeichnungen erläutert. Dabei zeigen:
- Fig. 1: Eine perspektivische Ansicht eines zusammengebauten Wickelbandes mit einer Verdrehsicherung.
- Fig. 2: Eine erste perspektivische Detailansicht der Verdrehsicherung am zusammengebauten Wickelband aus Fig. 1.
- Fig. 3: Eine zweite perspektivische Detailansicht der Verdrehsicherung am zusammengebauten Wickelband aus Fig. 1.

### Ausführungsformen der Erfindung

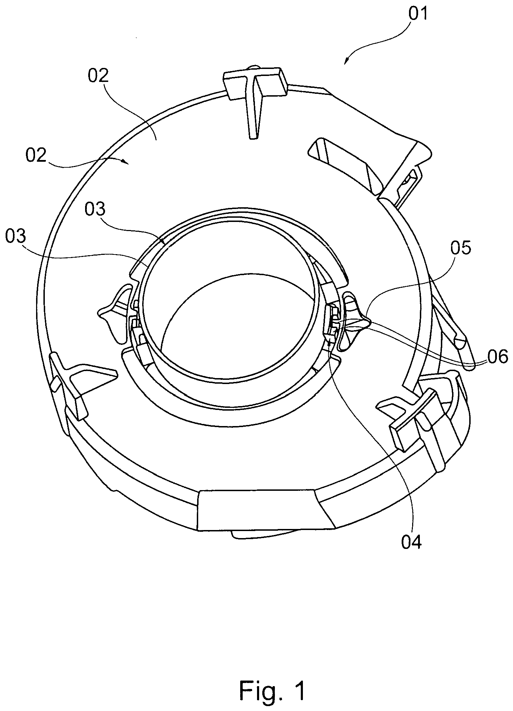

Ein in Figur 1 dargestelltes Wickelband 01 besteht im Wesentlichen aus einem Gehäuse 02 und einem Rotor 03. Gehäuse 02 und Rotor 03 des Wickelbandes 01 sind in einer Betriebsstellung gegeneinander verdrehbar und axial verschiebbar, bzw. zueinander rotatorisch und axial beweglich. In einer in Figur 1 dargestellten Transportstellung sind Gehäuse 02 und Rotor 03 des Wickelbandes 01 durch eine Verdrehsicherung 06 gegeneinander fixiert bzw. weder zueinander rotatorisch noch axial beweglich.

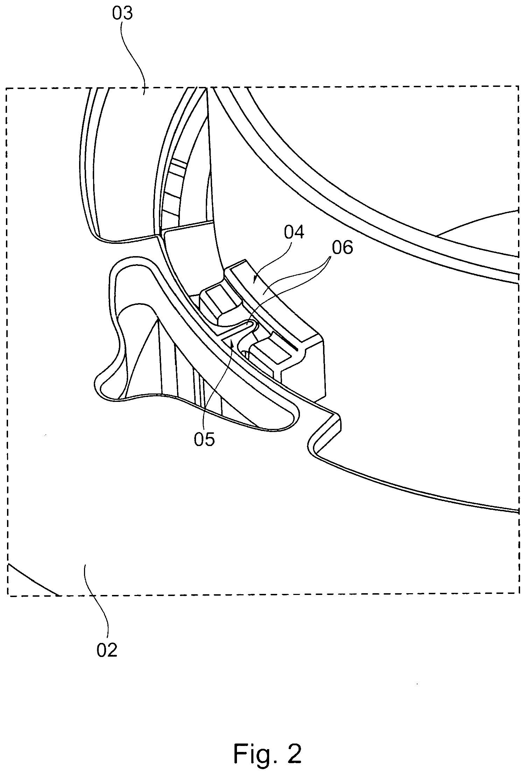

Wie in Fig. 2 dargestellt, befindet sich am Rotor 03 eine Nut 04 in die eine Rastnase 05 des Gehäuses 02 einrastet. Damit ist die durch das Einrasten von Rastnase 05 und Nut 04 hergestellte Verbindung 06 zwischen Rotor 03 und Gehäuse 02 gegen Verdrehen und axiale Bewegung fixiert. Die Verbindung 06 bzw. Verrastung 06 bildet damit die Verdrehsicherung 06. In dieser Position kann das Produkt 01 transportiert werden, ohne dass es auseinanderfällt und ohne dass Gefahr besteht, dass sich das Wickelband vom Rotor 03 abwickelt.

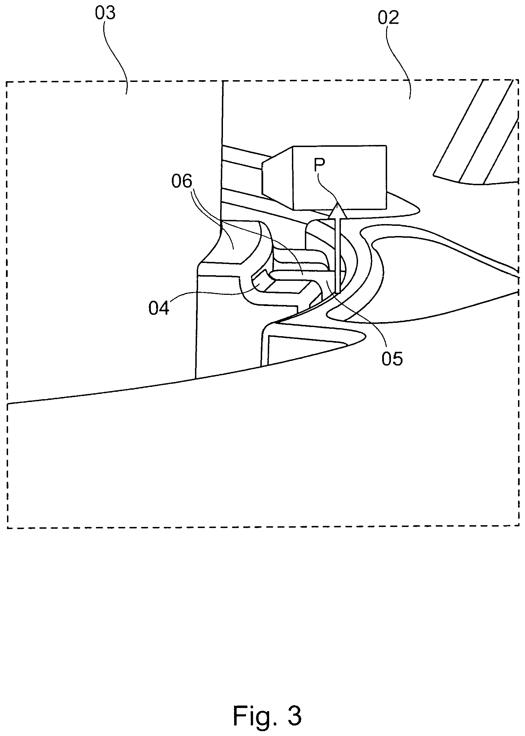

Bei der Montage des Sensorgehäuses 02 wird dieses relativ zum Rotor 03 in axialer Richtung bewegt, wie durch den Pfeil P in Fig. 3 angedeutet, und die Verrastung 06 gelöst. Nun befinden sich Rotor 03 und Gehäuse 02 in Betriebsstellung und sind zueinander rotatorisch und axial beweglich.

## Patentansprüche

1. Verdrehsicherung (06), insbesondere eine Transportsicherung, eines Rotors (03) und eines Gehäuses (02) eines Wickelbandes (01), **dadurch gekennzeichnet, dass** die Verdrehsicherung (06) in das Gehäuse (02) und den Rotor (03) des Wickelbandes (01) integriert ist, wobei die Verdrehsicherung (06) durch eine Verrastung zwischen Rotor (03) und Gehäuse (02) gebildet ist und durch eine axiale Verschiebung (P) zwischen Gehäuse (02) und Rotor (03) herstellbar bzw. lösbar ist.

2. Verdrehsicherung nach Anspruch 1, **dadurch gekennzeichnet, dass** die Verdrehsicherung (06) derart ausgebildet ist, dass sich am Rotor (03) eine Nut (04) befindet, in die eine am Gehäuse (02) angeordnete Rastnase (05) einrastet.

3. Verdrehsicherung nach Anspruch 1, **dadurch gekennzeichnet, dass** die Verdrehsicherung (06) derart ausgebildet ist, dass sich am Gehäuse (02) eine Nut (04) befindet, in die eine am Rotor (03) angeordnete Rastnase (05) einrastet.

4. Verdrehsicherung nach Anspruch 1, 2 oder 3, **dadurch gekennzeichnet, dass** die Verdrehsicherung (06), der Rotor (03) und das Gehäuse (02) sowohl rotatorisch als auch axial zueinander fixiert sind.

5. Wickelband (01) zur Herstellung einer elektrischen Verbindung zwischen einem ersten, einer Drehbewegung folgenden Bauteil und einem zweiten, nicht der Drehbewegung folgenden Bauteil in einer Betriebsstellung, umfassend ein Gehäuse (02) und einen in Betriebsstellung gegenüber dem Gehäuse rotatorisch und axial beweglichen Rotor (03), wobei das Gehäuse (02) gegenüber dem Rotor (03) in einer Transportstellung mittels einer Verdrehsicherung (06) in Bezug auf eine rotatorische und eine axiale Bewegung gesichert bzw. fixiert ist, **dadurch gekennzeichnet, dass** die Verdrehsicherung (06) in das Gehäuse (02) und den Rotor (03) des Wickelbandes (01) integriert ist, wobei die Verdrehsicherung (06) durch eine Verrastung zwischen Rotor (03) und Gehäuse (02) gebildet ist und durch eine axiale Verschiebung (P) zwischen Gehäuse (02) und Rotor (03) herstellbar bzw. lösbar ist.

6. Wickelband nach Anspruch 5, **dadurch gekennzeichnet, dass** die Verdrehsicherung (06) derart ausgebildet ist, dass sich am Rotor (03) eine Nut (04) befindet, in die eine am Gehäuse (02) angeordnete Rastnase (05) einrastet.

7. Wickelband nach Anspruch 5, **dadurch gekennzeichnet, dass** die Verdrehsicherung (06) derart ausgebildet ist, dass sich am Gehäuse (02) eine Nut (04) befindet, in die eine am Rotor (03) angeordnete Rastnase (05) einrastet.

8. Wickelband nach Anspruch 5, 6 oder 7, **dadurch gekennzeichnet, dass** die Verdrehsicherung (06) Rotor (03) und Gehäuse (02) sowohl rotatorisch als auch axial zueinander fixiert.

## Claims

1. Anti-twist element (06), in particular a transportation safeguard, for a rotor (03) and a housing (02) of a wraparound strip (01), **characterized in that** the anti-twist element (06) is integrated in the housing (02) and the rotor (03) of the wraparound strip (01), wherein the anti-twist element (06) is formed by a latching action between the rotor (03) and housing (02) and can be enabled and released by an axial displacement (P) between the housing (02) and rotor (03).

2. Anti-twist element according to Claim 1, **characterized in that** the anti-twist element (06) is designed such that the rotor (03) has a groove (04), into which a latching nose (05) arranged on the housing (02) latches.

3. Anti-twist element according to Claim 1, **characterized in that** the anti-twist element (06) is designed such that the housing (02) has a groove (04), into which a latching nose (05) arranged on the rotor (03) latches.

4. Anti-twist element according to Claim 1, 2 or 3, **characterized in that** the anti-twist element (06), the rotor (03) and the housing (02) are fixed both rotationally and axially in relation to one another.

5. Wraparound strip (01) for establishing an electrical connection between a first component, which follows a rotary movement, and a second component, which does not follow the rotary movement, in an operating position, comprising a housing (02) and a rotor (03) which, in the operating position, can be moved rotationally and axially in relation to the housing, wherein, in a transportation position, the housing (02) is secured and/or fixed in respect of a rotational and an axial movement in relation to the rotor (03) by means of an anti-twist element (06), **characterized in that** the anti-twist element (06) is integrated in the housing (02) and the rotor (03) of the wraparound strip (01), wherein the anti-twist element (06) is formed by a latching action between the rotor (03) and housing (02) and can be enabled and released by an axial displacement (P) between the housing (02) and rotor (03).

6. Wraparound strip according to Claim 5, **characterized in that** the anti-twist element (06) is designed such that the rotor (03) has a groove (04), into which a latching nose (05) arranged on the housing (02) latches.

7. Wraparound strip according to Claim 5, **characterized in that** the anti-twist element (06) is designed such that the housing (02) has a groove (04), into which a latching nose (05) arranged on the rotor (03) latches.

8. Wraparound strip according to Claim 5, 6 or 7, **characterized in that** the anti-twist element (06), rotor (03) and housing (02) are fixed both rotationally and axially in relation to one another.

## Revendications

1. Fixation antirotation (06), en particulier fixation pour le transport, d'un rotor (03) et d'un boîtier (02) d'une bande d'enroulement (01), **caractérisée en ce que** la fixation antirotation (06) est intégrée dans le boîtier (02) et le rotor (03) de la bande de roulement (01), la fixation antirotation (06) étant formée par un encliquetage entre le rotor (03) et le boîtier (02) et pouvant être appliquée ou desserrée par un déplacement axial (P) entre le boîtier (02) et le rotor (03).

2. Fixation antirotation selon la revendication 1, **caractérisée en ce que** la fixation antirotation (06) est réalisée de telle sorte qu'une rainure (04) soit située au niveau du rotor (03), dans laquelle s'encliquète un ergot d'encliquetage (05) disposé sur le boîtier (02).

3. Fixation antirotation selon la revendication 1, **caractérisée en ce que** la fixation antirotation (06) est réalisée de telle sorte qu'une rainure (04) soit située au niveau du boîtier (02), dans laquelle s'encliquète un ergot d'encliquetage (05) disposé sur le rotor (03).

4. Fixation antirotation selon la revendication 1, 2 ou 3, **caractérisée en ce que** la fixation antirotation (06), le rotor (03) et le boîtier (02) sont fixés à la fois en rotation et axialement les uns par rapport aux autres.

5. Bande d'enroulement (01) pour établir une liaison électrique entre un premier composant suivant un mouvement de rotation et un deuxième composant ne suivant pas le mouvement de rotation, dans une position fonctionnelle, comprenant un boîtier (02) et un rotor (03) déplaçable en rotation et axialement par rapport au boîtier dans une position fonctionnelle, le boîtier (02) étant immobilisé ou fixé par rapport au rotor (03) dans une position de transport au moyen d'une fixation antirotation (06) par rapport à un déplacement rotatif et axial, **caractérisée en ce que** la fixation antirotation (06) est intégrée dans le boîtier (02) et le rotor (03) de la bande d'enroulement (01), la fixation antirotation (06) étant formée par un encliquetage entre le rotor (03) et le boîtier (02) et pouvant être appliquée ou desserrée par un déplacement axial (P) entre le boîtier (02) et le rotor (03).

6. Bande d'enroulement selon la revendication 5, **caractérisée en ce que** la fixation antirotation (06) est réalisée de telle sorte qu'une rainure (04) soit située au niveau du rotor (03), dans laquelle s'encliquète un ergot d'encliquetage (05) disposé sur le boîtier (02).

7. Bande d'enroulement selon la revendication 5, **caractérisée en ce que** la fixation antirotation (06) est réalisée de telle sorte qu'une rainure (04) soit située au niveau du boîtier (02), dans laquelle s'encliquète un ergot d'encliquetage (05) disposé sur le rotor (03).

8. Bande d'enroulement selon la revendication 5, 6 ou 7, **caractérisée en ce que** la fixation antirotation (06) fixe le rotor (03) et le boîtier (02) à la fois en rotation et axialement l'un par rapport à l'autre.
